# EUROPÄISCHE PATENTSCHRIFT

(11) **EP 4 169 120 B1**
(45) Veröffentlichungstag und Bekanntmachung des Hinweises auf die Patenterteilung: **06.11.2024**
(21) Anmeldenummer: 20733782.5
(22) Anmeldetag: 18.06.2020
(51) Int. Cl.: H01Q 1/22, H01Q 5/40, H01Q 21/06, H01Q 21/28, G01F 23/284, G01F 23/296, H01Q 13/02, H01Q 19/08, G01S 1/00

(54) **ANTENNENSYSTEM FÜR EIN TOPOLOGIEERFASSENDES RADARMESSGERÄT**
ANTENNA SYSTEM FOR A TOPOLOGY-CAPTURING RADAR METER
SYSTÈME D'ANTENNES POUR APPAREIL DE MESURE RADAR À CAPTURE DE TOPOLOGIE

(43) Veröffentlichungstag der Anmeldung: 26.04.2023
(73) Patentinhaber: VEGA Grieshaber KG, 77709 Wolfach (DE)
(72) Erfinder: WÄLDE, Steffen, 78078 Niedereschach (DE); WELLE, Roland, 77756 Hausach (DE); DIETERLE, Levin, 77709 Oberwolfach (DE)
(74) Vertreter: Maiwald GmbH
(86) Internationale Anmeldenummer: PCT/EP2020/066939
(87) Internationale Veröffentlichungsnummer: WO 2021/254624

(56) Entgegenhaltungen:
- EP-A1- 3 290 856
- EP-A1- 3 309 523
- EP-B1- 3 309 523
- WO-A1-2020/049562
- DE-A1- 102017 210 781
- SHERIF SAYED AHMED ET AL: "Advanced Microwave Imaging", IEEE MICROWAVE MAGAZINE, IEEESERVICE CENTER, PISCATAWAY, NJ, US, vol. 13, no. 6, 1 September 2012 (2012-09-01), pages 26 - 43, XP011463408, ISSN: 1527-3342, DOI: 10.1109/MMM.2012.2205772
- XU DING ET AL: "A Dielectric-Filled Waveguide Antenna Element for 3D Imaging Radar in High Temperature and Excessive Dust Conditions", SENSORS, vol. 16, no. 8, 22 August 2016 (2016-08-22), pages 1339, XP055780268, DOI: 10.3390/s16081339

## Beschreibung

### Gebiet der Erfindung

Die Erfindung betrifft die Vermessung von Füllgutoberflächen. Insbesondere betrifft die Erfindung ein Antennensystem, eingerichtet für ein die Topologie einer Füllgutoberfläche erfassendes Radarmessgerät, ein Radarmessgerät mit einem solchen Antennensystem, ein Verfahren zum Messen einer Topologie einer Füllgutoberfläche, ein Programmelement und ein computerlesbares Medium.

### Technischer Hintergrund

Für die Erfassung der Topologie einer Füllgutoberfläche kann die Füllgutoberfläche mit einem Messsignal abgescannt werden. Entweder wird das Messgerät bzw. seine Antenne hierfür mechanisch verschwenkt, oder es wird eine elektronische Strahlsteuerung durchgeführt. Auch gibt es die Möglichkeit, beides zu mischen. Für die elektronische Strahlsteuerung wird bei Radarmessgeräten ein Array von Strahlerelementen verwendet. In diesem Zusammenhang spricht man auch von einer Arrayantenne.

Aus der erfassten Topologie kann dann der Füllstand und das Volumen des Füllguts berechnet werden.

Der Hardwareaufwand für die elektronische Strahlsteuerung ist nicht zu vernachlässigen; auch der für die Signalauswertung erforderliche Rechenaufwand kann erheblich sein. Aus diesem Grunde benötigen derartige Messgeräte verhältnismäßig viel Energie. Energie ist jedoch, je nach Einsatzort und Anbindung des Messgeräts, oft ein knappes Gut.

EP 3 309 523 A1 beschreibt ein Füllstandmessgerät zum Bestimmen einer Topologie einer Füllgutoberfläche, welches eine Antennenanordnung mit wenigstens drei Antenneneinrichtungen aufweist, die jeweils zum Senden eines Radarsignals und zum Empfangen eines an der Füllgutoberfläche reflektierten Signals eingerichtet sind.

Die Publikation von XU DING ET AL: "A Dielectric-Filled Waveguide Antenna Element for 3D Imaging Radar in High Temperature and Excessive Dust Conditions",SENSORS, Bd. 16, Nr. 8, 22. August 2016, Seite 1339, DOI: 10.3390/s16081339 offenbart einen die Topologie eines Füllguts erfassenden Radarsensor mit einer MIMO-Gruppenantenne.

EP 3 290 856 A1 offenbart einen hybriden Sensor für einen Flugkörper, wobei eine MIMO-Gruppenantenne um eine optische Kamera herum auf einem gemeinsamen Substrat angeordnet ist.

### Zusammenfassung der Erfindung

Vor diesem Hintergrund ist eine Aufgabe der vorliegenden Erfindung, ein Radarmessgerät, insbesondere ein Füllstandradarmessgerät, bereitzustellen, welches mit reduziertem Hardwareaufwand und reduziertem Energieverbrauch auskommt.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt der vorliegenden Offenbarung betrifft ein Antennensystem, eingerichtet für ein die Topologie einer Füllgutoberfläche erfassendes Radarmessgerät. Bei dem Radarmessgerät kann es sich insbesondere um ein Füllstandradarmessgerät zur Prozessautomatisierung im industriellen Umfeld handeln. Das Antennensystem weist eine erste Antennenanordnung auf, die eingerichtet ist zum Erfassen der Topologie der Füllgutoberfläche. Darüber hinaus weist sie eine zweite, zusätzliche Antennenanordnung auf, die eingerichtet ist zum Erfassen des Füllstands. Es werden also für die Füllstandmessung und für die Topologieerfassung verschiedene Antennenanordnungen verwendet.

Die erste Antennenanordnung ist eine Arrayantenne mit einem Array von Strahlerelementen, die um die zweite Antennenanordnung herum angeordnet sind.

Beispielsweise ist die zweite Antennenanordnung eine Hornantenne.

Auch die Strahlerelemente der ersten Antennenanordnung können (kleinere) Hornantennen sein. Man könnte sie auch als Hornstrahler bezeichnen, und sie können mit einem Dielektrikum gefüllt sein. Auch können sie in Form von Hohlleiteröffnungen (gefüllt oder ungefüllt) ausgeführt sein. Auch können Patchantennen, Stabstrahler oder andere Antennen verwendet werden.

Gemäß einer Ausführungsform ist der Durchmesser bzw. die Kantenlänge der Strahlerelemente der ersten Antennenanordnung (deutlich) kleiner als der Durchmesser bzw. die Kantenlänge der zweiten Antennenanordnung.

Gemäß einer Ausführungsform sind die Abstrahlflächen der Strahlerelemente der ersten Antennenanordnung und die Abstrahlfläche der zweiten Antennenanordnung auf derselben Ebene angeordnet. Die "Abstrahlfläche" der zweiten Antennenanordnung ist beispielsweise die Öffnung des Antennenhorns. Die Abstrahlfläche der Strahlerelemente der ersten Antennenanordnung ist, im Falle von Hornantennen, ebenfalls die Ebene der Öffnung der einzelnen Antennenhörner. Im Falle von ebenen Strahlerelementen (Patchantennen) werden die Abstrahlflächen von deren Oberfläche ausgebildet.

Gemäß einer weiteren Ausführungsform sind die Abstrahlflächen der Strahlerelemente der ersten Antennenanordnung und/oder die Abstrahlfläche der zweiten Antennenanordnung Löcher in einer metallischen Platte. Die Löcher können mit einem Dielektrikum gefüllt oder ungefüllt sein. Sie können einen kreisrunden oder eckigen Querschnitt aufweisen.

Die metallische Platte ist beispielsweise rund ausgeführt.

Die Strahlerelemente der ersten Antennenanordnung bilden beispielsweise ein Rechteck, ein Sechseck oder eine anderweitige polygonale Form mit abschnittsweise geraden Bereichen aus.

Gemäß einer Ausführungsform bestehen die Strahlerelemente der ersten Antennenanordnung aus einer (ersten) Gruppe von Sendeelementen und einer (zweiten) Gruppe von Empfangselementen. Ein weiterer Aspekt der vorliegenden Offenbarung betrifft ein Radarmessgerät, insbesondere ein Füllstandradarmessgerät, mit einem oben und im Folgenden beschriebenen Antennensystem.

Beispielsweise ist das Radarmessgerät zum Aussenden eines FMCW-Radarsignals mithilfe der ersten Antennenanordnung und eines Pulssignals mithilfe der zweiten Antennenanordnung eingerichtet.

Bei dem Pulssignal kann es sich beispielsweise um ein Radarsignal oder ein Ultraschallsignal handeln.

Ein weiterer Aspekt der vorliegenden Offenbarung betrifft ein Verfahren zum Messen einer Topologie einer Füllgutoberfläche, bei dem die Topologie der Füllgutoberfläche mit einer ersten Antennenanordnung erfasst wird. Gleichzeitig, davor oder danach wird der Füllstand mit einer zweiten Antennenanordnung erfasst. Die erste Antennenanordnung ist eine Arrayantenne mit einem Array von Strahlerelementen, die um die zweite Antennenanordnung herum angeordnet sind.

Ein weiterer Aspekt der vorliegenden Offenbarung betrifft ein Programmelement, das, wenn es auf dem Prozessor eines Füllstandmessgeräts ausgeführt wird, das Füllstandmessgerät anleitet, die oben und im Folgenden beschriebenen Schritte durchzuführen.

Ein weiterer Aspekt der vorliegenden Erfindung betrifft ein computerlesbares Medium, auf dem das oben beschriebene Programmelement gespeichert ist.

Unter dem Begriff "Prozessautomatisierung im industriellen Umfeld" kann ein Teilgebiet der Technik verstanden werden, welches Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb oder außerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Im Folgenden werden mit Verweis auf die Figuren Ausführungsformen der vorliegenden Offenbarung beschrieben. Werden in der folgenden Figurenbeschreibung die gleichen Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1a zeigt ein Füllstandradarmessgerät.
Fig. 1b zeigt ein die Topologie einer Füllgutoberfläche erfassendes Radarmessgerät.
Fig. 2a zeigt ein Radarmessgerät.
Fig. 2b zeigt das Radarmessgerät der Fig. 2a bei der Erzeugung verschiedener Sendekeulen.
Fig. 3a zeigt ein Strahlerelement.
Fig. 3b zeigt das Antennendiagramm eines einzelnen Strahlerelements.
Fig. 4a zeigt ein eindimensionales Array an Strahlerelementen.
Fig. 4b zeigt das Antennendiagramm des Arrays der Fig. 4a.
Fig. 4c zeigt ein mithilfe elektronischer Strahlsteuerung geändertes Antennendiagramm.
Fig. 5a zeigt ein Array aus Strahlerelementen mit anderem Abstand zueinander.
Fig. 5b zeigt das Antennendiagramm des Arrays der Fig. 5a.
Fig. 6 zeigt eine Arrayantenne gemäß einer Ausführungsform.
Fig. 7 zeigt ein Radarmessgerät gemäß einer Ausführungsform.
Fig. 8a zeigt ein Antennensystem gemäß einer Ausführungsform in Draufsicht.
Fig. 8b zeigt das Antennensystem der Fig. 8a von der Seite.
Fig. 8c zeigt eine perspektivische Ansicht des Antennensystems der Fig. 8a.
Fig. 9 zeigt ein Antennensystem mit einer anderen Anordnung von Strahlerelementen.
Fig. 10 zeigt ein Flussdiagramm eines Verfahrens gemäß einer Ausführungsform.

### Detaillierte Beschreibung von Ausführungsformen

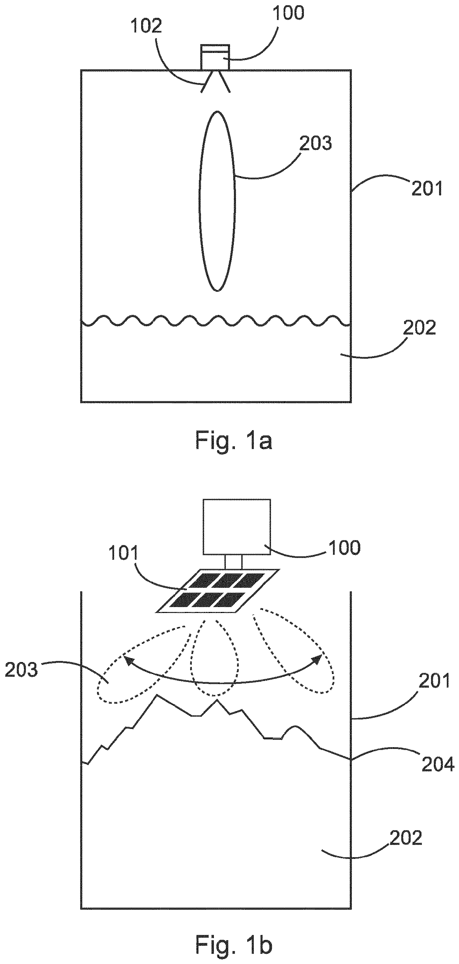

Fig. 1a zeigt ein Radarmessgerät 100, das in einem Behälter 201 eingebaut ist. In dem Behälter befindet sich ein Füllgut 202 mit einer etwas unebenen Oberfläche. Das Radarmessgerät 100 weist eine Antennenanordnung 102 in Form einer Hornantenne auf, welche ein Radarsignal in Richtung Füllgutoberfläche abstrahlt. Dieses Radarsignal kann ein pulsförmiges Radarsignal sein und ist durch die Ellipse 203 dargestellt. Das Radarsignal wird dann an einer Füllgutoberfläche reflektiert und wieder von der Antennenanordnung 102 empfangen und im Messgerät 100 ausgewertet, um den Füllstand zu berechnen.

In der Füllstandradartechnik haben sich verschiedene Antennentypen abhängig vom Einsatzort und Einsatzzweck als zuverlässig und nützlich erwiesen. So werden beispielsweise für Einsatzzwecke, bei denen eine sehr hohe Richtwirkung benötigt wird, Parabolspiegel eingesetzt. Diese können bei relativ geringer Bautiefe einen sehr hohen Antennengewinn erzielen.

Eine weitere, sehr etablierte Antennenbauform ist die Hornantenne. Diese sehr weit verbreitete Antenne kann neben einem hohen Gewinn auch kostengünstig sehr robust aufgebaut werden. Häufig enthalten Hornantennen ebenfalls eine Linse im vorderen Bereich, die verschiedene Vorteile aufweist. Zum einen kann die Hornantenne durch den Verkürzungsfaktor, den die elektromagnetische Welle im Kunststoff erfährt, kompakter aufgebaut werden. Weiterhin kann durch die Linse eine Prozessabdichtung gegenüber dem Prozessmessgerät (Radarmessgerät 100) hergestellt werden. Gespeist werden Hornantennen meist von Hohlleitern.

Oft sind die Hornantennen rund bzw. rotationssymmetrisch ausgeführt. Da in der Prozessindustrie Behälteröffnungen sehr häufig rund ausgeführt sind, können rotationssymmetrische Antennen sehr gut an die Behälter adaptiert werden. Häufig sind Behälteröffnungen auch mit Gewinden versehen, in die die Antenne eingeschraubt werden kann. Hier sind runde Antennen ebenfalls von Vorteil. Auch können Hornantennen kostengünstig als Drehteil hergestellt werden.

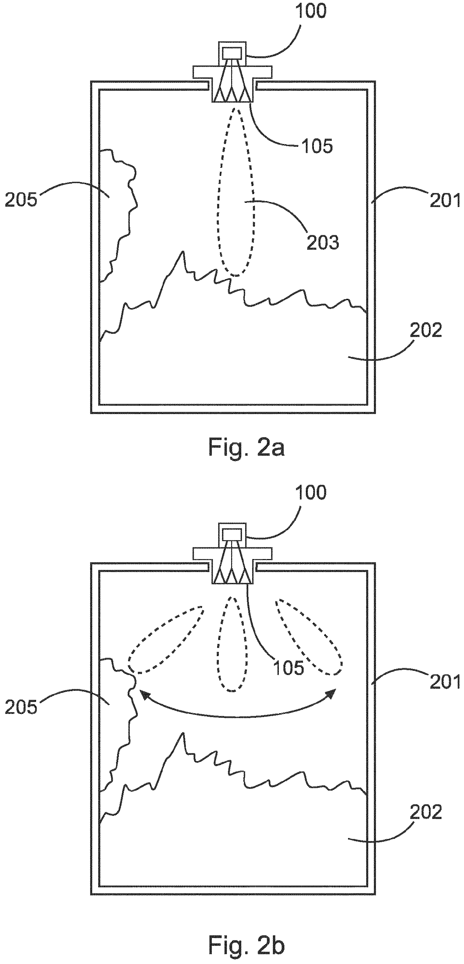

Fig. 1b zeigt ein die Topologie einer Füllgutoberfläche 204 erfassendes Radarfüllstandmessgerät 105. Es ist dafür eingerichtet, die Topologie der Füllgutoberfläche 204 der Schüttguthalde 202 zu erfassen oder Anhaftungen 205 (vgl. Fig. 2a) an der Behälterwand zu erkennen.

Das in der Fig. 1b gezeigte Radarfüllstandmessgerät 105 weist eine Antennenanordnung 101 auf, die in Form einer Arrayantenne mit einem Array von Strahlerelementen ausgebildet ist, und mithilfe derer eine elektronische Strahlsteuerung stattfinden kann, um die Füllgutoberfläche abzuscannen und somit die Topologie der Füllgutoberfläche zu erfassen. Bezugszeichen 203 zeigt die unterschiedlichen Abstrahlrichtungen.

Neben Systemen, in denen die Antenne mechanisch geschwenkt wird, können auch Systeme verwendet werden, die die Hauptabstrahlrichtung der Antenne elektronisch schwenken können. Auch können teilmechanische Systeme verwendet werden, die eine Richtung der Hauptkeule der Antenne mechanisch schwenken und die andere Richtung elektronisch. Im Folgenden werden Antennensysteme mit elektronisch schwenkbaren Antennenkeulen beschrieben.

Elektronisch geschwenkte Antennen sind Antennen, deren Hauptabstrahl- und Hauptempfangsrichtung (Hauptkeule, englisch "Main Lobe") elektronisch bzw. digital geschwenkt werden können. Sie besitzen eine Vielzahl an Sende- und/oder Empfangskanälen. Diese Radarmessgeräte werden häufig als MIMO (Multiple Input Multiple Output) Radargeräte bezeichnet. Die verschiedenen Möglichkeiten, sende- und empfangsseitig die Hauptabstrahl- und Hauptempfangsrichtung zu ändern, sollen im Folgenden nicht beschrieben werden.

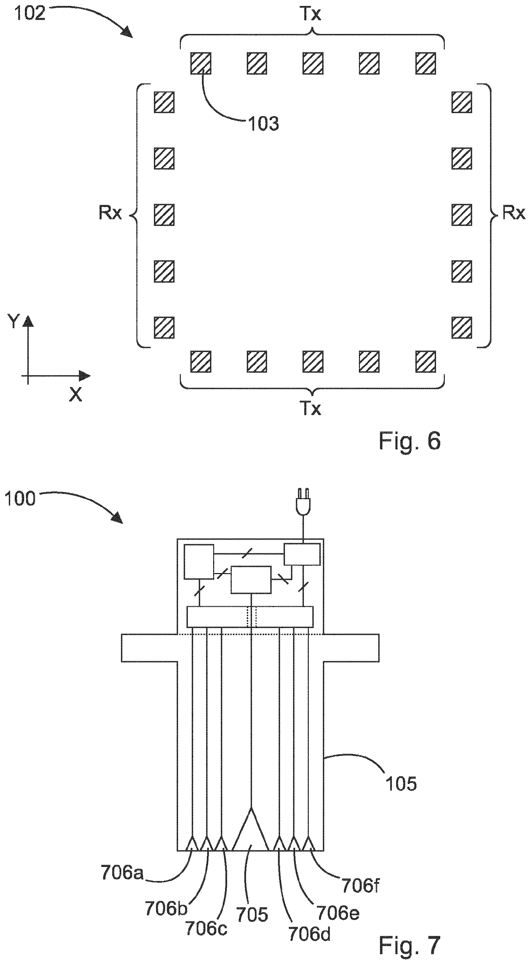

Eine wichtige Rolle spielen dabei die Positionen der Antennenelemente. Die Antennenelemente 103 (vgl. beispielsweise Fig. 6) spannen ein Antennenarray auf. Dabei sind die Antennenelemente 103 oft gleich geartet und bezüglich ihrer Hauptabstrahlrichtung gleich orientiert und polarisiert.

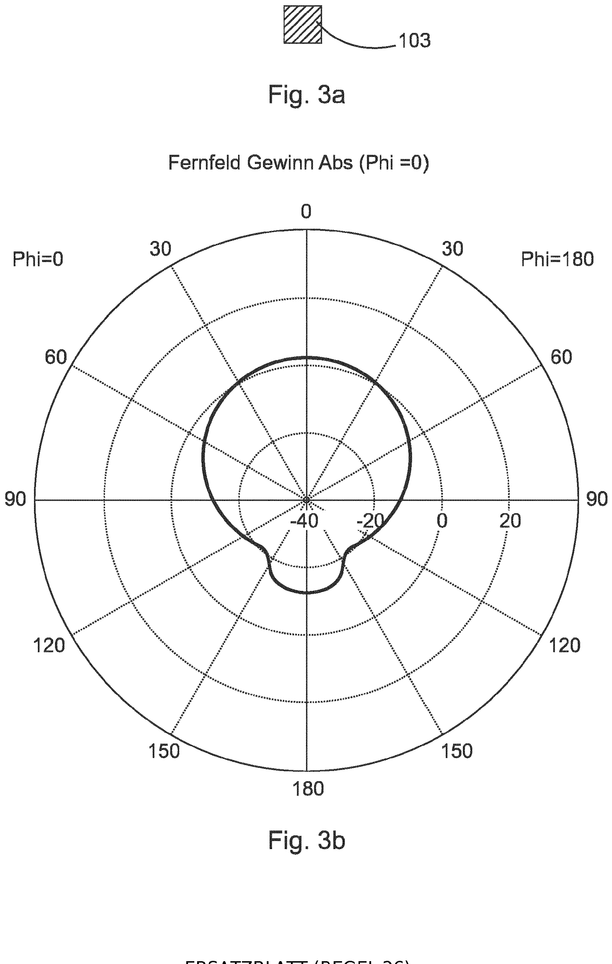

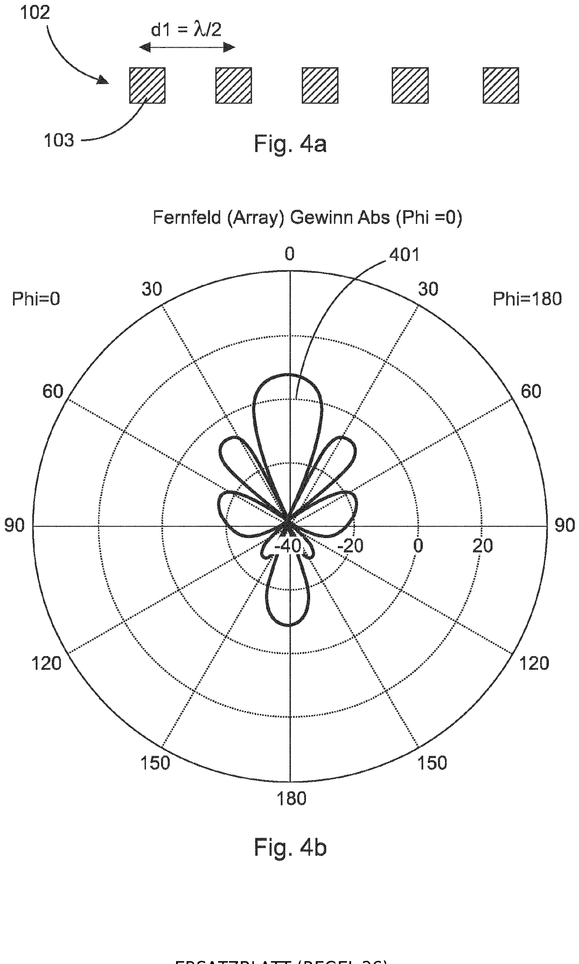

Als vorteilhaft erweist sich bei einer Vielzahl von mehr als zwei Antennenelementen ein gleicher Abstand d1 zwischen diesen (vgl. Fig. 4a). Senden die einzelnen Strahlerelemente 103 nun gleichzeitig das gleiche Signal, ergibt sich eine Gesamtrichtcharakteristik (siehe Fig. 4b), die sich von der Richtcharakteristik (siehe Fig. 3b) des Einzelstrahlers 103 der Fig. 3a unterscheidet.

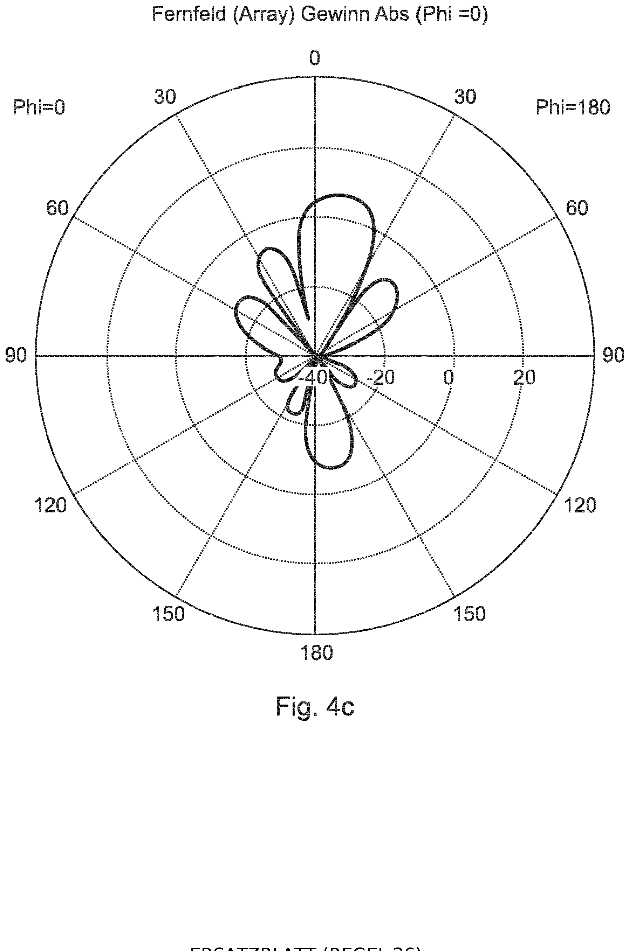

Bei korrekter Dimensionierung besitzt die Gesamtrichtcharakteristik neben einem höheren Antennengewinn ebenfalls einen kleineren Öffnungswinkel. Werden diese Sendesignale nun mit einer vorgegebenen Phasenverschiebung belegt, ist es möglich, die Richtung der Hauptabstrahlrichtung zu ändern (siehe Fig. 4c). Diese Eigenschaften verhalten sich im Sende- und Empfangsfall typischerweise gleich.

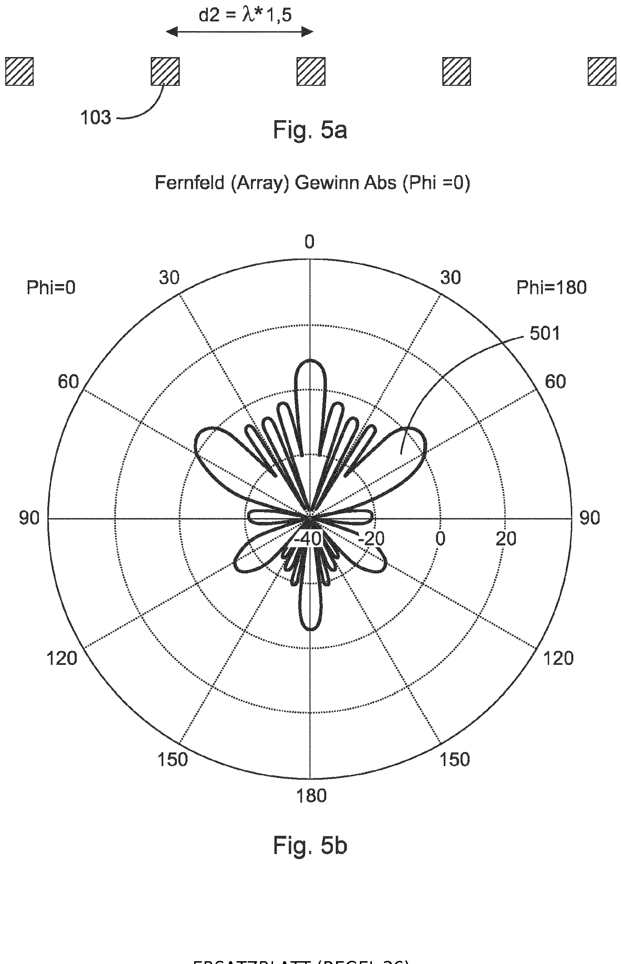

Der Antennenabstand der Einzelstrahler wirkt sich auf die Hauptabstrahlrichtung aus. Ist der Antennenabstand d2 (vgl. Fig. 5a) größer als die halbe Wellenlänge des gesendeten Signals, so entstehen sog. Gitterkeulen. Diese Gitterkeulen besitzen fast denselben Antennengewinn, wie die Hauptkeule, jedoch eine andere Richtung. Je nach Anwendung gilt es, solche Gitterkeulen zu vermeiden, da diese im Radarbild Falschziele erzeugen.

Eine solche Gitterkeule 501 ist in Fig. 5b gezeigt.

Dies kann man entweder durch Auslegung des Antennenarrays mit einem Antennenabstand ≤ der halben Wellenlänge vermeiden, sodass keine Gitterkeulen entstehen, oder durch logische Ausblendung der durch die Gitterkeulen entstehenden Falschziele.

Ein weiterer Aspekt bei der Auslegung eines Antennenarrays ist die aufgespannte Gesamtfläche, die auch als Antennenapertur bekannt ist und im Folgenden auch als Abstrahlfläche bezeichnet wird. Allgemein lässt sich sagen, dass, je größer die Apertur ist, desto kleiner der Antennenöffnungswinkel ist.

Ein Ziel ist es, eine Antennenapertur zu erzielen, die einen kleinen Öffnungswinkel, jedoch möglichst wenig Gitter- und Nebenkeulen aufweist. Dies ist mit einer großen Anzahl von Radarkanälen realisierbar, was wiederum erhöhte Kosten und erhöhten Energieverbrauch mit sich bringt. An dieser Stelle gilt es, ein Optimum zu finden.

Die Antennendiagramme aus den Figuren 4b, 4c und 5b beziehen sich jeweils auf lineare Antennenarrays, also Antennengruppen aus Strahlerelementen, die in einer Zeile angeordnet sind, wie dies in Fig. 5a zu sehen ist. Das jeweilige Antennendiagramm erhält man also, wenn man die Richtcharakteristik entlang der Längsausdehnung des Arrays aufnimmt. In dieser Richtung kann nun die Hauptkeule geschwenkt werden.

Soll nun die Hauptabstrahlrichtung in zwei Raumrichtungen (Dimensionen) geschwenkt werden, so muss das Array in ebenfalls zwei Raumrichtungen ausgedehnt sein, wie dies in der Fig. 6 zu sehen ist. Dieses Array 102 besteht nun aus vier Teilarrays mit jeweils fünf Antennenelementen 103, die jeweils eine lineare Ausdehnung aufweisen. Die Antennenelemente 103 können dabei Sender und/oder Empfänger sein.

Durch eine entsprechende Belegung der Antennenelemente als Sender und/oder Empfänger und die entsprechende Ansteuerung dieser sowie der zugehörigen Signalverarbeitung kann mit einem solchen Array sende- und empfangsseitige Strahlformung betrieben werden. Eine mögliche Belegung der Antennenelemente 103 wäre in diesem Fall, dass die horizontalen Antennenelemente als Sender und die vertikalen Elemente als Empfänger eingerichtet und betrieben werden.

Ein wichtiger Aspekt hinsichtlich des Energieverbrauchs ist die anschließende Berechnung speziell bei der digitalen Strahlformung. Die digitale Strahlformung ist eine Möglichkeit, die Hauptempfangsrichtung des Empfängerarrays zu variieren, bzw. die empfangene Energie aus beliebigen Richtungen zu messen. Dies kann über eine schnelle Fourier-Transformation (FFT) erfolgen. Diese kann besonders energiesparend in digitalen Rechenwerken in Mikrocontrollern oder FPGAs (Field Programmable Gate Array) berechnet werden.

Es erweist sich als vorteilhaft, wenn das zu berechnende Array linear (siehe Figuren 4a, 5a) bzw. rechteckig (siehe Fig. 6) ist und konstante Antennenabstände in die jeweilige Raumrichtung aufweist. In einer Ausführungsform ist es ebenfalls möglich, dass beispielsweise die Antennenabstände in Raumrichtung x einen anderen Abstand aufweisen, als in Raumrichtung y. Diese Abstände sollten also nur in der jeweiligen Raumrichtung konstant sein.

Zur Berechnung einer räumlichen Dimension wird nur eine FFT benötigt. Bei anderen Antennenanordnungen, wie z. B. hexagonalen Arrays, werden dann mehr als eine FFT zur Berechnung einer räumlichen Dimension benötigt, was nachteilig für die Energiebilanz des Gesamtgeräts ist, da die Berechnungszeit bei der Auswertung der Messdaten höher ist.

Die Energiebilanz spielt speziell für die in der Prozessautomatisierung im industriellen Umfeld weit verbreitete Zweileiterschnittstelle eine wichtige Rolle. Hier steht dem Messgerät nur eine sehr begrenzte Leistung zur Verfügung, die zur Messdatenerfassung und -auswertung verwendet werden kann. Über einen entsprechend langsamen Messzyklus können diese vorgegebenen Energiemengen zur Füllstand- und Topologiemessung ausgenutzt werden.

Da sich die Topologie eines Füllguts häufig nur langsam ändert und die Bildung von Anhaftungen ebenfalls nur langsame Prozesse sind, können langsame Messzyklen in Kauf genommen werden. Prinzipiell sind aber Füllstandmessungen für manche Bereiche in der Prozessindustrie mit hohem Messzyklus (als in verhältnismäßig schneller Abfolge) wichtig. Um diese beiden Messtechniken in einem Gerät zu vereinen, unter der Berücksichtigung der begrenzt zur Verfügung stehenden Energie, wird eine Kombination aus herkömmlichem Füllstandmessgerät und einem topologieerfassenden Messgerät vorgeschlagen.

Fig. 7 zeigt ein Radarmessgerät 100 gemäß einer Ausführungsform der vorliegenden Offenbarung. Das Radarmessgerät 100, bei dem es sich um einen Füllstandradarmessgerät handeln kann, weist ein Antennensystem 105 auf. Dieses Antennensystem 105 besitzt eine Antennenanordnung 705 zur Füllstandmessung sowie ein Sende- und Empfangsantennenarray 706a, 706b, 706c, 706d, 706e, 706f zur Topologieerfassung.

Die Antennenanordnung 705 zur Füllstandmessung kann als Hornantenne mit Linse ausgeführt sein und ist im Zentrum der dem Prozess zugewandten Seite des Antennensystems angeordnet. Der Antennengewinn der Füllstandantenne 705 ist größer als der Antennengewinn eines Einzelstrahlers des topologieerfassenden Arrays 706a bis f.

Ebenfalls ist es möglich, dass die Füllstandantenne 705 für einen anderen Frequenzbereich ausgelegt ist, als das Antennenarray zur Topologiemessung. Beispielsweise kann das Antennenarray für eine Frequenz von 80 GHz ausgelegt sein und die Füllstandantenne für eine Frequenz von 180 GHz.

Die Antennenelemente 706a bis f der Arrayantenne können beispielsweise als Hohlleiteröffnungen, Hornstrahler, als mit einem Dielektrikum gefüllte Hohlleiteröffnung oder Hornstrahler ausgeführt sein. Ebenso sind Patchantennen, Stabstrahler oder andere Antennen möglich.

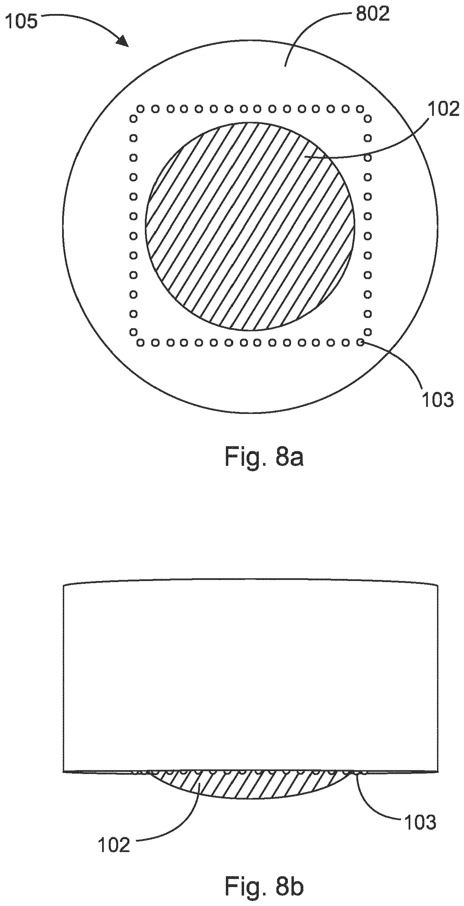

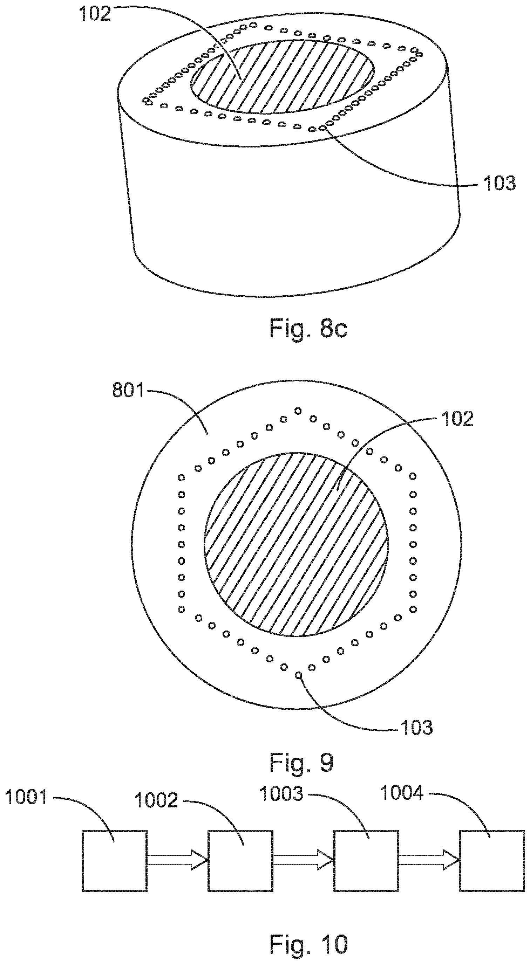

In einer Ausführungsform sind die Öffnungen der Horn-Arrayantennen, sowie die Öffnung der Füllstandhornantenne auf einer Ebene in einer metallischen Platte 802 eingelassen (siehe Figs. 8a, 8b und 8c). Diese metallische Platte 802 ist beispielsweise rund ausgeführt und passt durch einen DN 100 oder DN 80 Prozessanschluss hindurch. Das Antennensystem hat also einen kleineren Durchmesser als die Öffnung des Prozessbehälters. Somit kann die gesamte Antenne durch diesen Prozessanschluss in den Behälter hineingeführt werden.

Weiterhin ist die Anordnung der Antennen 706a bis f des Arrays mit der Füllstandantenne 705 relevant. Beispielsweise sind Sende- und Empfangsarray der topologieerfassenden Antennenanordnung jeweils linear ausgestaltet. Die Sendeantennenanordnung kann dabei aus ein oder mehreren Zeilen bestehen. Ebenso kann die Empfangsantennenanordnung aus einer oder mehreren Spalten bestehen. In diesem Ausführungsbeispiel stehen Sende- und Empfangszeilen orthogonal zueinander.

In einer Ausführungsform sitzt die Füllstandhornantenne 102 in der Mitte des Antennensystems 105 und ist umgeben von Sende- und Empfangszeilenantennen der topologieerfassenden Antennenanordnung 101. Durch die rechteckige Antennenarrayanordnung der topologieerfassenden Arrayantenne können energieeffiziente Strahlformungsalgorithmen angewendet werden. Ebenfalls kann die Füllstandantenne dann möglichst groß ausgeführt werden.

Gemäß einer weiteren Ausführungsform sind die Antennen 103 des Arrays in einem Sechseck angeordnet (vgl. Fig. 9). Dies hat zur Folge, dass der zur Verfügung stehende Platz besser durch das Array ausgenutzt werden kann. Ebenfalls kann die Füllstandantenne größer ausgeführt werden.

Gemäß einer weiteren Ausführungsform ist die Anzahl der Sendeantennenelemente ungleich der Anzahl der Empfangsantennenelemente.

Gemäß einer weiteren Ausführungsform hat das Antennensystem 105 ein oder mehrere Vorrichtungen zur Vermeidung von Anhaftungen. Hier seien beispielweise ein Radom, Spülluft oder ein Sack bzw. eine Abdeckung aus flexiblem PTFE-Material genannt.

Gemäß einer weiteren Ausführungsform bedienen sich die Füllstandmessung und die topologieerfassende Messung unterschiedlicher Messprinzipien, insbesondere unterschiedlicher Radarmessprinzipien. Beispielsweise kann die Füllstandmessung als Pulsradarverfahren durchgeführt werden und die topologieerfassende Messung als FMCW-Verfahren.

Weiterhin kann die Polarisation der Füllstandantenne bezüglich der Arrayantennen zur Unterdrückung von Störreflexionen unterschiedlich sein.

Ebenfalls können die Messungen parallel oder sequenziell ablaufen. In vorteilhafter Weise sind bei einer gleichzeitigen Messung die Radarverfahren oder -frequenzen so gewählt, dass sich die beiden Messungen gegenseitig nicht stören.

Auch ist es möglich, dass die Füllstandmessung auf einem anderen Messprinzip basiert, wie z. B. eine ultraschallbasierte oder eine optische Füllstandmessung.

Gemäß einer weiteren Ausführungsform ist die Füllstandantenne als Rechteckhornantenne ausgeführt. In Kombination mit einem rechteckigen Antennenarray lässt sich so mit einer Rechteckhornantenne die aufgespannte Fläche innerhalb des Antennenarrays optimal ausnutzen und es lässt sich ein maximaler Gewinn erzielen.

Das Antennensystem umfasst eine einzelne Füllstandantenne und ein davon unabhängiges Antennenarray zur Topologieerfassung. Der Durchmesser des Antennensystems ist im Regelfall kleiner als die Behälteröffnung. Die Füllstandantenne ist umgeben von dem Antennenarray. Die verschiedenen Teilarrays können gleich zueinander ausgerichtet sein. Beispielsweise können die linearen Teilarrays die gleiche Orientierung haben, so wie es in Figur 6 zu sehen ist. Die Tx-Sendeantennen sind in x-Richtung ausgerichtet, Rx-Empfangsantennen sind in y-Richtung ausgerichtet.

Auch können die Teilarrays gleich zur Füllstandantenne ausgerichtet sein. Für die Füllstandantenne und die Arrayantenne können unterschiedliche Frequenzbereiche verwendet werden. Es kann eine gemeinsame Vorrichtung zur Vermeidung von Anhaftungen vorgesehen sein. Insbesondere können unterschiedliche Radarverfahren bei der Füllstandmessung und der Topologiemessung angewendet werden. Auch können unterschiedliche Polarisationen der Füllstandantenne und der Arrayantenne angewendet werden.

Fig. 10 zeigt ein Flussdiagramm eines Verfahrens gemäß einer Ausführungsform. In Schritt 1001 wird mit einer ersten Antennenanordnung die Topologie der Füllgutoberfläche erfasst. In Schritt 1002 wird mit einer zweiten Antennenanordnung der Füllstand erfasst. In Schritt 1003 werden beide Messungen bei der Berechnung des Volumens des Füllguts verwendet und der Füllstand bzw. das Volumen in Schritt 1004 ausgegeben. Hier sei angemerkt, dass die beiden Messverfahren auch unabhängig voneinander agieren können. Der Füllstand kann unabhängig von der Topologie erfasst werden. Die Füllstandmessung kann eine höhere Messrate als die Topologiemessung aufweisen. Die Topologiemessung kann unabhängig von der Füllstandmessung durchgeführt werden. Zur Erhöhung der Messsicherheit und zur Plausibilisierung der Messdaten der Topologieerfassung können die Messdaten der Füllstandmessung herangezogen werden, was aber keinesfalls ein Muss ist.

## Patentansprüche

1. Antennensystem (105), eingerichtet für ein die Topologie einer Füllgutoberfläche (204) erfassendes Radarmessgerät (100), aufweisend:
eine erste Antennenanordnung (101), eingerichtet zum Erfassen der Topologie der Füllgutoberfläche;
eine zweite Antennenanordnung (102), eingerichtet zum Erfassen des Füllstands;
wobei die erste Antennenanordnung eine Arrayantenne mit einem Array von Strahlerelementen (103) ist, die um die zweite Antennenanordnung herum angeordnet sind;
wobei die Abstrahlflächen der Strahlerelemente (103) der ersten Antennenanordnung (101) und die Abstrahlfläche der zweiten Antennenanordnung (102) auf der selben Ebene angeordnet sind.

2. Antennensystem (105) nach Anspruch 1,
wobei die zweite Antennenanordnung (102) eine Hornantenne ist.

3. Antennensystem (105) nach einem der vorhergehenden Ansprüche,
wobei die Strahlerelemente (103) der ersten Antennenanordnung (101) Hornantennen oder Hohlleiteröffnungen sind.

4. Antennensystem (105) nach einem der vorhergehenden Ansprüche,
wobei der Durchmesser oder die Kantenlänge der Strahlerelemente (103) der ersten Antennenanordnung (101) kleiner ist als der Durchmesser oder die Kantenlänge der zweiten Antennenanordnung (102).

5. Antennensystem (105) nach einem der vorhergehenden Ansprüche,
wobei die Abstrahlflächen der Strahlerelemente (103) der ersten Antennenanordnung (101) und die Abstrahlfläche der zweiten Antennenanordnung (102) in Form von gefüllten oder ungefüllten Löchern in einer metallischen Platte (802) des Antennensystems (105) angeordnet sind.

6. Antennensystem (105) nach Anspruch 5,
wobei die metallische Platte (802) rund ausgeführt ist.

7. Antennensystem (105) nach einem der vorhergehenden Ansprüche,
wobei die Strahlerelemente (103) der ersten Antennenanordnung (101) ein Rechteck oder ein Sechseck ausbilden.

8. Antennensystem (105) nach einem der vorhergehenden Ansprüche,
wobei die Strahlerelemente (103) der ersten Antennenanordnung (101) aus einer Gruppe von Sendeelementen und einer Gruppe von Empfangselementen bestehen.

9. Radarmessgerät (100) mit einem Antennensystem (105) nach einem der vorhergehenden Ansprüche.

10. Radarmessgerät (100) nach Anspruch 9, eingerichtet zum Aussenden eines FMCW-Radarsignals mit der ersten Antennenanordnung (101) und eines Pulssignals mit der zweiten Antennenanordnung (102).

11. Radarmessgerät (100) nach Anspruch 9 oder 10, wobei das Pulssignal ein Radarsignal ist.

12. Radarmessgerät (100) nach einem der Ansprüche 9 bis 11, wobei der Gesamtdurchmesser des Antennensystems kleiner ist als der Durchmesser der Behälteröffnung, durch welche das Rardarmessgerät eingeschoben und/oder woran es befestigt wird.

13. Verfahren zum Messen einer Topologie einer Füllgutoberfläche (204), aufweisend die Schritte:
Erfassen der Topologie der Füllgutoberfläche mit einer ersten Antennenanordnung (101);
Erfassen des Füllstands mit einer zweiten Antennenanordnung (102);
wobei die erste Antennenanordnung eine Arrayantenne mit einem Array von Strahlerelementen (103) ist, die um die zweite Antennenanordnung herum angeordnet sind; und
wobei die Abstrahlflächen der Strahlerelemente (103) der ersten Antennenanordnung (101) und die Abstrahlfläche der zweiten Antennenanordnung (102) auf der selben Ebene angeordnet sind.

14. Programmelement, das, wenn es auf dem Prozessor eines Füllstandmessgeräts ausgeführt wird, das Füllstandmessgerät anleitet, die folgenden Schritte durchzuführen:
Erfassen der Topologie der Füllgutoberfläche (204) mit einer ersten Antennenanordnung (101);
Erfassen des Füllstands mit einer zweiten Antennenanordnung (102);
wobei die erste Antennenanordnung eine Arrayantenne mit einem Array von Strahlerelementen (103) ist, die um die zweite Antennenanordnung herum angeordnet sind; und
wobei die Abstrahlflächen der Strahlerelemente (103) der ersten Antennenanordnung (101) und die Abstrahlfläche der zweiten Antennenanordnung (102) auf der selben Ebene angeordnet sind.

15. Computerlesbares Medium, auf dem ein Programmelement nach Anspruch 14 gespeichert ist.

## Claims

1. Antenna system (105) configured for a radar measuring device (100) detecting the topology of a product surface (204), comprising:
a first antenna assembly (101) configured to detect the topology of the product surface;
a second antenna assembly (102) configured to detect the fill level;
wherein the first antenna assembly is an array antenna having an array of radiator elements (103) arranged around the second antenna configuration;
wherein the radiating surfaces of the radiator elements (103) of the first antenna assembly (101) and the radiating surface of the second antenna assembly (102) are arranged on the same plane.

2. Antenna system (105) according to claim 1,
wherein the second antenna assembly (102) is a horn antenna.

3. An antenna system (105) according to any one of the preceding claims,
wherein the radiator elements (103) of the first antenna assembly (101) are horn antennas or waveguide apertures.

4. Antenna system (105) according to any one of the preceding claims,
wherein the diameter or edge length of the radiator elements (103) of the first antenna assembly (101) is smaller than the diameter or edge length of the second antenna assembly (102).

5. Antenna system (105) according to any one of the preceding claims,
wherein the radiating surfaces of the radiator elements (103) of the first antenna assembly (101) and the radiating surface of the second antenna assembly (102) are arranged in the form of filled or unfilled holes in a metallic plate (802) of the antenna system (105).

6. Antenna system (105) according to claim 5,
wherein the metallic plate (802) is round.

7. Antenna system (105) according to any one of the preceding claims,
wherein the radiator elements (103) of the first antenna assembly (101) form a rectangle or a hexagon.

8. Antenna system (105) according to any one of the preceding claims,
wherein the radiator elements (103) of the first antenna assembly (101) comprise a group of transmitting elements and a group of receiving elements.

9. Radar measuring device (100) comprising an antenna system (105) according to any of the preceding claims.

10. Radar measuring device (100) of claim 9, configured to transmit an FMCW radar signal with the first antenna assembly (101) and a pulse signal with the second antenna assembly (102).

11. Radar measuring device (100) of claim 9 or 10, wherein the pulse signal is a radar signal.

12. Radar measuring device (100) of any one of claims 9 to 11, wherein the overall diameter of the antenna system is smaller than the diameter of the container opening through which the radar measuring device is inserted and/or to which it is attached.

13. Method for measuring a topology of a product surface (204), comprising the steps of:
Detecting the topology of the product surface with a first antenna assembly (101);
detecting the fill level with a second antenna assembly (102);
wherein the first antenna assembly is an array antenna having an array of radiator elements (103) arranged around the second antenna assembly;
wherein the radiating surfaces of the radiator elements (103) of the first antenna assembly (101) and the radiating surface of the second antenna assembly (102) are arranged on the same plane.

14. A program element which, when executed on the processor of a level meter, directs the level meter to perform the following steps:
Detecting the topology of the product surface (204) with a first antenna array (101);
detecting the fill level with a second antenna assembly (102);
wherein the first antenna assembly is an array antenna having an array of radiator elements (103) arranged around the second antenna assembly;
wherein the radiating surfaces of the radiator elements (103) of the first antenna assembly (101) and the radiating surface of the second antenna assembly (102) are arranged on the same plane.

15. A computer-readable medium on which is stored a program element according to claim 14.

## Revendications

1. Système d'antennes (105), conçu pour un appareil de mesure radar (100) détectant la topologie d'une surface de produit de remplissage (204), comportant :
un premier agencement d'antenne (101), conçu pour détecter la topologie de la surface de produit de remplissage ;
un deuxième agencement d'antenne (102), conçu pour détecter le niveau de remplissage ;
dans lequel le premier agencement d'antenne est une antenne réseau avec un réseau d'éléments rayonnants (103) disposés autour du deuxième agencement d'antenne ;
dans lequel les surfaces de rayonnement des éléments rayonnants (103) du premier agencement d'antenne (101) et la surface de rayonnement du deuxième agencement d'antenne (102) sont disposées sur le même plan.

2. Système d'antennes (105) selon la revendication 1,
dans lequel le deuxième agencement d'antenne (102) est une antenne à cornet.

3. Système d'antennes (105) selon l'une des revendications précédentes,
dans lequel les éléments rayonnants (103) du premier agencement d'antenne (101) sont des antennes à cornet ou des ouvertures de guide d'ondes.

4. Système d'antennes (105) selon l'une des revendications précédentes,
dans lequel le diamètre ou la longueur d'arête des éléments rayonnants (103) du premier agencement d'antenne (101) est inférieur (e) au diamètre ou à la longueur d'arête du deuxième agencement d'antenne (102).

5. Système d'antennes (105) selon l'une des revendications précédentes,
dans lequel les surfaces de rayonnement des éléments rayonnants (103) du premier agencement d'antenne (101) et la surface de rayonnement du deuxième agencement d'antenne (102) sont disposées sous la forme de trous remplis ou non remplis dans une plaque métallique (802) du système d'antennes (105).

6. Système d'antennes (105) selon la revendication 5,
dans lequel la plaque métallique (802) est de forme ronde.

7. Système d'antennes (105) selon l'une des revendications précédentes,
dans lequel les éléments rayonnants (103) du premier agencement d'antenne (101) forment un rectangle ou un hexagone.

8. Système d'antennes (105) selon l'une des revendications précédentes,
dans lequel les éléments rayonnants (103) du premier agencement d'antenne (101) sont constitués d'un groupe d'éléments d'émission et d'un groupe d'éléments de réception.

9. Appareil de mesure radar (100) doté d'un système d'antennes (105) selon l'une des revendications précédentes.

10. Appareil de mesure radar (100) selon la revendication 9, conçu pour émettre un signal radar FMCW avec le premier agencement d'antenne (101) et un signal impulsionnel avec le deuxième agencement d'antenne (102).

11. Appareil de mesure radar (100) selon la revendication 9 ou 10, dans lequel le signal impulsionnel est un signal radar.

12. Appareil de mesure radar (100) selon l'une des revendications 9 à 11, dans lequel le diamètre total du système d'antennes est inférieur au diamètre de l'ouverture de récipient à travers laquelle l'appareil de mesure radar est inséré et/ou à laquelle il est fixé.

13. Procédé de mesure de la topologie d'une surface de produit de remplissage (204), comportant les étapes de :
détecter la topologie de la surface de produit de remplissage avec un premier agencement d'antenne (101) ;
détecter le niveau de remplissage avec un deuxième agencement d'antenne (102) ;
dans lequel le premier agencement d'antenne est une antenne réseau avec un réseau d'éléments rayonnants (103) disposés autour du deuxième agencement d'antenne ; et
dans lequel les surfaces de rayonnement des éléments rayonnants (103) du premier agencement d'antenne (101) et la surface de rayonnement du deuxième agencement d'antenne (102) sont disposées sur le même plan.

14. Élément de programme qui, lorsqu'il est exécuté sur le processeur d'un appareil de mesure de niveau de remplissage, amène l'appareil de mesure de niveau de remplissage à exécuter les étapes de :
détecter la topologie de la surface de produit de remplissage (204) avec un premier agencement d'antenne (101) ;
détecter le niveau de remplissage avec un deuxième agencement d'antenne (102) ;
dans lequel le premier agencement d'antenne est une antenne réseau avec un réseau d'éléments rayonnants (103) disposés autour du deuxième agencement d'antenne ; et
dans lequel les surfaces de rayonnement des éléments rayonnants (103) du premier agencement d'antenne (101) et la surface de rayonnement du deuxième agencement d'antenne (102) sont disposées sur le même plan.

15. Support lisible par ordinateur sur lequel est stocké un élément de programme selon la revendication 14.
